# EUROPEAN PATENT SPECIFICATION

(11) **EP 1 001 329 B1**
(45) Date of publication and mention of the grant of the patent: **18.04.2007**
(21) Application number: 99120094.0
(22) Date of filing: 21.10.1999
(51) Int. Cl.: G06F 21/20

(54) **A user-computer interaction method for use by flexibly connectable computer systems**
Benutzer-Rechner Wechselwirkungsverfahren das durch flexibel verbindbare Rechnersysteme verwendet werden soll
Procédé d'interaction entre un utilisateur et un ordinateur pour l'utilisation de systèmes d'ordinateurs pouvant être reliés entre eux de manière flexible

(30) Priority: 10.11.1998 US 189960; 05.10.1999 US 412292
(43) Date of publication of application: 17.05.2000
(73) Proprietor: Aladdin Knowledge Systems Ltd., Tel Aviv 67211 (IL)
(72) Inventor: Margalit, Yanki, Ramat Gan 52223 (IL); Margalit, Dany, Ramat Gan 52223 (IL); Kastershtien, Rami, Tel Aviv 67442 (IL)
(74) Representative: Modiano, Micaela Nadia

(56) References cited:
- EP-A- 0 554 164
- EP-A- 0 843 250
- EP-A- 0 848 315
- WO-A-94/10773
- DE-U- 29 804 165
- "WIBU-KEY, User's Guide Version 2.50" [Online] July 1998 (1998-07) , WIBU-SYSTEMS AG , KARLSRUHE, GERMANY XP002139279 Retrieved from the Internet: <URL: ftp://www2.wibu.de/pub/download/us/UG250US .pdf> [retrieved on 2000-05-25] * page 12, paragraph 1 - page 14, paragraph 3 * * page 16, paragraph 2 * * page 25, line 1 - page 27, last line * * page 164 *
- GUEULLE P: "UN DONGLE A PUCE DE TELECARTE" ELECTRONIQUE RADIO PLANS,FR,SPE, PARIS, no. 528, 1 November 1991 (1991-11-01), pages 75-78, XP000266390 ISSN: 1144-5742

## Description

### FIELD OF THE INVENTION

The present invention relates to flexibly connectible computer apparatus and methods for using flexibly connectible hosts.

### BACKGROUND OF THE INVENTION

The USB interface is described in specifications available over the Internet at www.usb.org.

Firewire technology, also termed "IEEE 1394 technology", is an alternative to USB which also provides flexible connectivity and is described in the IEEE 1394 standard.

USBHasp is an Aladdin software protection product, announced in October 1997, which includes a USB key. USBHasp does not control access of a user to a computer network but rather impedes interaction between software and a computer system by activating a copy of the software only if a USB key corresponding to that copy is plugged into the computer system.

Conventionally, the only devices which have interacted via USB have been computers, keyboard, monitor, printer, mouse, smart card readers, and biometric readers.

Conventional devices for providing computerized servicing to a mobile or stationary population of users typically include a smart card reader. The members of the mobile population bear smart cards which are used to interact with the computerized servicing device via the smart card reader.

A particular disadvantage of smart cards is that they require a smart card reader which is a relatively costly device. Computer hosts which are equipped with a smart card reader are a small subset of the universe of computer hosts because addition of a smart card reader makes the computer considerably more expensive.

German Patent document DE 19631050 describes an interface converter for a universal serial bus having a module with a processor that changes format and protocol into that of a different bus system.

Rainbow Technologies, Inc., in a news release dated 17 November 1998, announce USB software protection keys which can also be used as authentication or access control devices. A unique ID number if assigned to each USB key, enabling the key to replace or supplement personal passwords.The unique ID of the USB key makes it useful as a notebook computer security device providing theft deterrence. Other uses for the USB keys include Web access control, client token for Virtual Private Network access, replacement for password generator tokens and storage of credentials, certificates and licenses.

In a news release dated 19 January 1999, Rainbow Technologies, Inc. announce a new line of USB tokens for VPNs (virtual private networks) which provides end user client authentication to VPNs and enables operator access to secured network equipment. Features of these tokens include "Internet security small enough to fit on a key-ring" and "personalization for the end user". The tokens allow a user to keep personal information in his or her pocket rather than on a hard drive.

A new "unique per individual" model of its USB based tokens was announced by Rainbow Technologies Inc. on 15 March 1999.

The disclosures of all publications mentioned in the specification and of the publications cited therein are hereby incorporated by reference.

WO 94 10773 A discloses a system which prevents unauthorized access to programs and data in a computer and which monitors computer access and usage. More in detail, the parallel printer port of the computer is continuously monitored to detect the presence of an authorized user identification key. The key is a specialized electronic device containing encrypted data used to identify each unique computer user.

"WIBU-KEY, User's Guide Version 2.50" [Online] July 1998 (1998-07), WIBU-SYSTEMS AG, KARLSRUHE, GERMANY XP002139279 discloses a WIBU-Key consisting of encryption and driver software and a hardware component called the WIBU-Box that can be connected to the computer through different available ports.

GUEULLE P: "UN DONGLE A PUCE DE TELECARTE" ELECTRONIQUE RADIO PLANS, FR,SPE, PARIS, no. 528, 1 November 1991 (1991-11-01), discloses an electronic key to be placed in the parallel or serial port of a computer in order to protect software illegal copies.

EP-A-0 848 315 discloses a method for generating system passwords derived from an external encryption algorithm and plain text user passwords entered during a secure power-on procedure. The authorization process requires the presence of both a user password and an external token or smart card in order to generate a system password.

EP-A-0 554 164 discloses PC-cards insertable in readers operating according to different communication protocols. The invention consists of essentially using those card contacts which have identical or very similar meanings in all the protocols in order to make a prior selection of the protocol which will be subsequently used in practice.

### SUMMARY OF THE INVENTION

The present invention seeks to provide improved flexibly connectible apparatus and improved methods for using the same.

There is thus provided, in accordance with a preferred embodiment of the present invention, a user-computer interaction method for use by a population of flexibly connectible computer systems and a population of mobile users, the method including storing information characterizing each mobile user on an FCCS plug to be borne by that mobile user and accepting the FCCS plug from the mobile user for connection to one of the flexibly connectible computer systems and employing the information characterizing the mobile user to perform at least one computer operation.

Further in accordance with a preferred embodiment of the present invention, at least one computer operation comprises authentication.

Also provided, in accordance with another preferred embodiment of the present invention, is a an FCCS plug device to be borne by a mobile user, the FCCS plug device including a portable device which mates with a flexibly connectible computer system and comprises a memory and information characterizing the mobile user and stored in the memory accessibly to the flexibly connectible computer system.

Also provided, in accordance with another preferred embodiment of the present invention, is a population of FCCS plug devices to be borne by a corresponding population of mobile users, the population of FCCS plug devices including a multiplicity of portable devices each of which mates with a flexibly connectible computer system and comprises a memory and information characterizing each mobile user in the population of mobile users and stored, accessibly to the flexibly connectible computer system, in the memory of the FCCS plug device to be borne by the mobile user.

Additionally provided, in accordance with another preferred embodiment of the present invention, is an FCCS plug device including a mating element operative to mate with a flexibly connectible computer system and a memory connected adjacent the mating element, thereby to form a portable pocket-size plug, wherein the memory is accessible to the flexibly connectible computer system via the mating element.

Also provided, in accordance with another preferred embodiment of the present invention, is an FCCS plug device including a mating element operative to mate with a flexibly connectible computer system and a CPU connected adjacent the mating element, thereby to form a portable pocket-size plug, wherein the CPU has a data connection to the flexibly connectible computer system via the mating element.

Further in accordance with a preferred embodiment of the present invention the FCCS plug device also comprises a CPU connected adjacent the mating element, thereby to form a portable pocket-size plug, wherein the CPU has a data connection to the flexibly connectible computer system via the mating element.

Still further in accordance with a preferred embodiment of the present invention, at least one computer operation comprises digital signature verification and/or controlling access to computer networks.

Further in accordance with a preferred embodiment of the present invention, the information characterizing each mobile user comprises sensitive information not stored in the computer system, thereby to enhance confidentiality.

Also provided, in accordance with another preferred embodiment of the present invention, is a user-computer interaction method for use by a population of flexibly connectible computer systems and a population of mobile users, the method including
storing confidential information not stored by the flexibly connectible computer systems on an FCCS plug to be borne by an individual user within the population of mobile users and
accepting the FCCS plug from the mobile user for connection to one of the flexibly connectible computer systems and employing the confidential information to perform at least one computer operation, thereby to enhance confidentiality.

Preferably the apparatus also includes a microprocessor operative to receive the USB communications from the USB interface, to perform computations thereupon and to provide results of the computations to the data storage unit for storage and/or for encryption and/or for authentication and/or for access control.

The term "USB port" refers to a port for connecting peripherals to a computer which is built according to a USB standard as described in USB specifications available over the Internet at www.usb.org.

The term "USB plug" or "USB key" or "USB token" refers to a hardware device whose circuitry interfaces with a USB port to perform various functions.

The term "smart card" refers to a typically plastic card in which is embedded a chip which interacts with a reader, thereby allowing a mobile bearer of the smart card to interact with a machine in which is installed a smart card reader, typically with any of a network of machines of this type.

Also provided in accordance with a preferred embodiment of the present invention is an electronic token, which preferably mates with a flexible connection providing port such as the USB port of any computer system such as a PC, laptop, palmtop or peripheral. The electronic token preferably does not require any additional reading equipment. The token may authenticate information and/or store passwords or electronic certificates in a token which may be the size of a domestic house key.

Preferably, when the token is inserted into a flexible connection providing port, a highly secure "dual factor authentication" process (e.g. "what you have" plus "what you know") takes place in which (a) the electronic token is "read" by the host PCC or network and (b) the user types in his or her personal password for authorization.

Suitable applications for the electronic token include authentication for VPN, extranet and e-commerce.

The present invention also seeks to provide improved USB apparatus and improved methods for using the same.

There is thus provided, in accordance with another preferred embodiment of the present invention, USB key apparatus for interacting with a USB host via a USB port, the USB key apparatus including a portable device configured to fit the USB port, the portable device including a USB interface conveying USB communications to and from a USB host, a protocol translator operative to translate the USB communications from USB protocol, into smart card protocol such as an ISO7816 protocol, and from smart card protocol into USB protocol and a smart card chip operative to perform at least one smart card function such as authentication, encryption, access control and secure memory.

Also provided, in accordance with another preferred embodiment of the present invention, is USB key apparatus with data storage capabilities, the USB key apparatus including a portable device such as a PCB, configured to fit the USB port, the portable device including a USB interface conveying USB communications to and from a USB host and a data storage unit storing information derived from the USB communications.

### BRIEF DESCRIPTION OF THE DRAWINGS

The present invention will be understood and appreciated from the following detailed description, taken in conjunction with the drawings in which:
Fig. 1 is a simplified block diagram of a USB plug device including a CPU and a non-ISO7816 memory, the USB device being constructed and operative in accordance with a preferred embodiment of the present invention;
Fig. 2 is a simplified block diagram of a USB plug device including a CPU and a ISO7816 memory, the USB device being constructed and operative in accordance with a preferred embodiment of the present invention;
Fig. 3 is an exploded front view of an FCCS plug constructed and operative in accordance with a preferred embodiment of the present invention and implementing the USB plug device of Fig. 1;
Fig. 4 is an exploded view of an FCCS plug constructed and operative in accordance with a preferred embodiment of the present invention and implementing the USB plug device of Fig. 2; and
Figs. 5A - 5B pictorially illustrate a user-computer interaction method provided in accordance with a preferred embodiment of the present invention for use by a population of flexibly connectible computer systems and a population of mobile users.

### DETAILED DESCRIPTION OF PREFERRED EMBODIMENTS

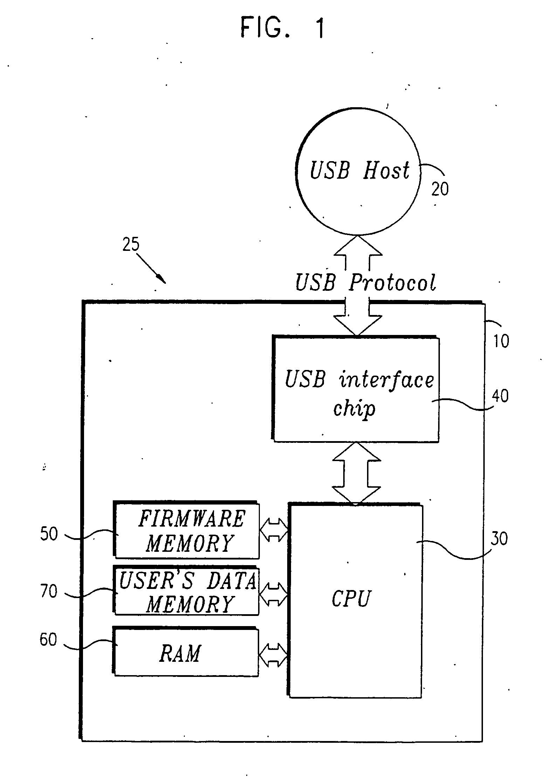

Reference is now made to Fig. 1 which is a simplified block diagram of a flexibly connectible USB plug device including a CPU and a non-ISO7816 memory, the USB device being constructed and operative in accordance with a preferred embodiment of the present invention.

A particular feature of the USB plug device of Fig. 1 is that it has data storage capabilities and is thus analogous to a memory smart card.

The USB plug device 10 comprises a PCB 25 which includes a microprocessor or CPU 30 such as a Motorola 6805, Cypress chip or Intel 8051; a USB interface device 40; firmware memory 50 serving the firmware of the microprocessor 30; RAM memory 60 of size sufficient to enable contemplated computations on the part of the microprocessor 30; and user data memory 70 which stores a user's data. Some or all of the USB interface device 40, firmware memory 50 and RAM memory 60 may be within the CPU 30.

The USB interface device 40 and/or the firmware memory 50 may be integrated inside the microprocessor 30.

The firmware memory may be any suitable type of memory such as but not limited to ROM, EPROM, EEPROM or FLASH.

The user data memory 70 typically does not include ISO7816-3 memory and may, for example, comprise any of the following types of memory: I²C, XI²C, 2/3 wire bus, FLASH.

As shown, the USB plug device 10 is configured to interact with any USB host 20 such as but not limited to a personal computer or Macintosh having a USB port. Key-host interaction is governed by a USB protocol such as the USB protocol described in the USB specifications available over the Internet at www.usb.org. USB packets pass between the USB host 20 and the USB interface chip 40. Each packet typically includes the following components:
a. USB header;
b. Data to be stored/read on the user's data memory 70, plus additional information required by protocols of the memory chip 70, such as but not limited to the address to store/read the data, the length of data to store/read, and CRC checksum information.
c. USB footer.

The flow of data typically comprises the following flow:

The USB interface chip 40 receives USB packets from the USB host 20, parses the data, and feeds the parsed data to the microprocessor 30. The microprocessor 30 writes the data to, or reads the data from, the firmware memory 50, the RAM 60 or the user's data memory 70, using each memory's protocol.

In read operation, the microprocessor 30 passes the data to the USB interface chip 40 which wraps the data in USB packet format and passes it to the host 20.

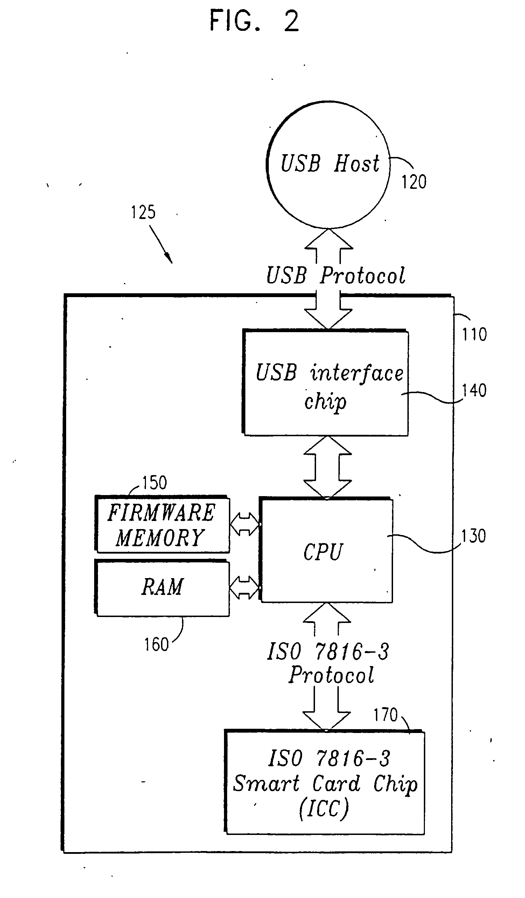

Fig. 2 is a simplified block diagram of a USB plug device, constructed and operative in accordance with a preferred embodiment of the present invention, which is a one-piece smart card reader and smart card chip preferably providing both secured storage and cryptographic capabilities. The USB plug device of Fig. 2 includes both a CPU and a smart card chip (ICC) memory 170, typically a ISO7816 (T = 0/1) protocol-based chip communicating with the CPU 130 using an ISO7816-3 protocol. The apparatus of Fig. 2 is similar to the apparatus of Fig. 1 except that no separate user's data memory 70 is provided. The size of the RAM 160 is typically at least 262 bytes in order to support the ISO 7816_3 T=0 or T=1 protocols.

Each packet typically includes the following components:
a. USB header;
b. ISO7816-3 T=0/1 protocol packet;
c. USB footer.

The flow of data in the apparatus of Fig. 2 typically comprises the following flow:

The USB interface chip 140 gets USB packets from the USB host 120. The USB interface chip 140 parses the data and passes it to the microprocessor 130. The data, which typically comprises a ISO7816-3 T=0/1 formatted packet, is passed by the microprocessor to the smart-card 170 in a ISO7816-3 protocol. The microprocessor 130 gets the response from the smart card 160 and passes the data to the USB interface chip 140. The USB interface chip 140 wraps the data in USB packet format and passes it to the host 120.

A particular advantage of the embodiment of Fig. 2 is that smart card functionality is provided but there is no need for a dedicated reader because the plug 110 is connected directly to a USB socket in the host 120.

The invention shown and described herein is particularly useful for computerized systems serving organizations which process sensitive information such as banks, insurance companies, accountants and other commercial organizations, and professional organizations such as medical or legal organizations.

Conventional computer systems include a computer (comprising a motherboard) and at least one peripherals. The computer has a number of different ports which respectively mate with the ports of the various peripherals. Each port typically can mate with only certain peripherals and not with other peripherals. For example, the keyboard cannot be connected to the computer via the computer's printer port.

In state of the art computer systems, also termed herein "flexibly connectible computer systems", the computer and the peripherals each include at least one identical ports having mating ports on any other computer and any other peripheral such that any peripheral can be selectably connected to any computer or to any other peripheral. Also, a peripheral may be connected to the computer not directly as in conventional systems but rather via another peripheral. There is generally always a port available on one or more connected peripherals in an existing computer system such that another peripheral can generally always be connected to an existing computer system.

One example of a flexibly connectable computer system is a USB (universal standard bus) system in which the computer and each peripheral includes a USB port. Another example of a flexibly connectable computer system is the recently contemplated Firewire system.

A "USB plug" is a portable device which mates with a USB system and, as opposed to peripherals which contain mechanical elements, typically comprises only memory and/or CPU and therefore is typically pocket-size. More generally, a USB plug is an example of a plug which can be plugged into a flexibly connectible computer system (FCCS).

The term "FCCS plug" is used herein to refer to a portable device which mates with a flexibly connectible computer system and, as opposed to peripherals which contain mechanical elements, typically comprises only memory and/or CPU and therefore is typically pocket-size. It is appreciated that because each peripheral connected onto a flexibly connectible computer system typically has at least one port, therefore, a flexibly connectible computer system of any configuration typically has at least one vacant port available to interact with an FCCS plug. USB tokens and Rainbow tokens are both examples of FCCS plugs.

Typically, each of the plurality of computer system units (computer and one or more peripherals) forming a computer system has at least two identical female sockets and these are interconnected by means of male-male cables. In this embodiment, the FCCS plug may comprise a male socket. However, it is appreciated that any suitable mating scheme may be employed to mate the computer system units and the the FCCS plug of the present invention.

A known use for FCCS plugs is use in conjunction with software having plug-recognizing capability. Aladdin and Rainbow both market software which is operative only if the host computer system in which a particular software copy resides has plugged into it an FCCS plug which is recognized by the software copy. The Aladdin and Rainbow plugs are not used for authentication.

Computer systems are often used to receive information characterizing a mobile user, who is one of a population of mobile users, and to process this information. Such information may comprise user identity authentication information, banking information, access rights information, etc. Conventionally, this information is stored on a smart card which is borne by the user and is presented to the computer system by him. However this requires the computer system to be equipped with a smart card reader, a special piece of equipment dedicated to reading the smart card.

According to a preferred embodiment of the present invention, information characterizing a mobile user is stored on an FCCS plug. Particular advantages of this embodiment of the present invention is that the information is easily borne by the user, on a pocketsize substrate, that any flexibly connectible computer system of any configuration is typically capable of interacting with the user via the FCCS plug, and that no dedicated equipment is required by the computer in order to carry out the interaction:

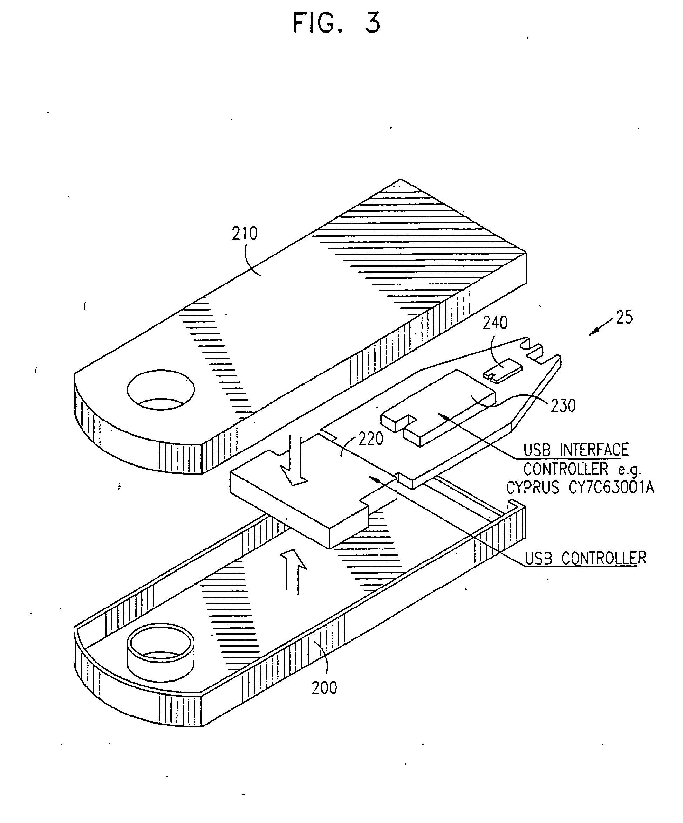

Reference is now made to Fig. 3 which is an exploded front view of an FCCS plug constructed and operative in accordance with a preferred embodiment of the present invention and implementing the USB key device of Fig. 1. As shown, the FCCS plug of Fig. 3 comprises a housing typically formed of two snap-together planar cover elements 200 and 210, between which reside a USB connector 220 and the PCB 25 of Fig. 1. The USB connector 220 may, for example comprise a USB PLUG SMT <ACN-0213> device marketed by Aska Technologies Inc., No. 15, Alley 22, Lane 266, Fu Teh, 1st Rd., Hsl Chih, Talpei Shien, Taiwan. The PCB 25 bears the elements 30, 40, 50, 60 and 70 of Fig. 1. Firmware managing the memory 240 may reside on the USB interface controller 230.

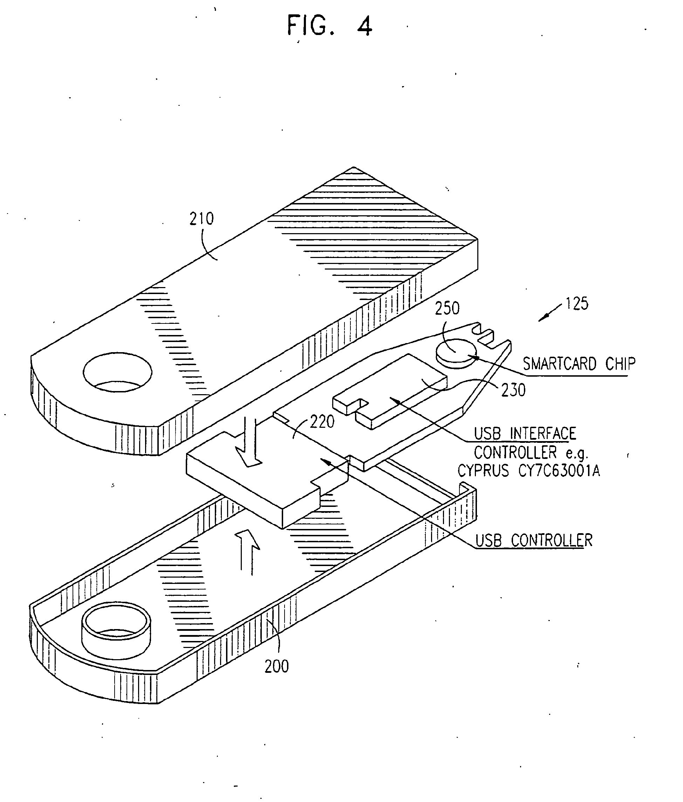

Reference is additionally made to Fig. 4 which is an exploded view of an FCCS plug constructed and operative in accordance with a preferred embodiment of the present invention and implementing the USB key device of Fig. 2. As shown, the FCCS plug of Fig. 4 comprises a housing typically formed of two snap-together planar cover elements 200 and 210, between which reside the USB connector 220 and a PCB 125. The PCB 125 bears the elements 130, 140, 150, 160 and 170 of Fig. 2. Firmware managing the smart card chip 250 may reside on the USB interface controller 230.

Smart card functionalities which are preferably provided by the FCCS plug of the present invention include:
1. Controlling access to computer networks: Smart card or plug has ID information, network authenticates and allows access on that basis. Authentication may be based upon "what you have", "what you are" e.g. biometric information and "what you know" (e.g. password).
2. Digital signatures or certificates for verifying or authenticating the identity of the sender of a document.
3. Storage of confidential information e.g. medical information. A smart card or plug may store confidential information and interact with a network which does not store the confidential information.

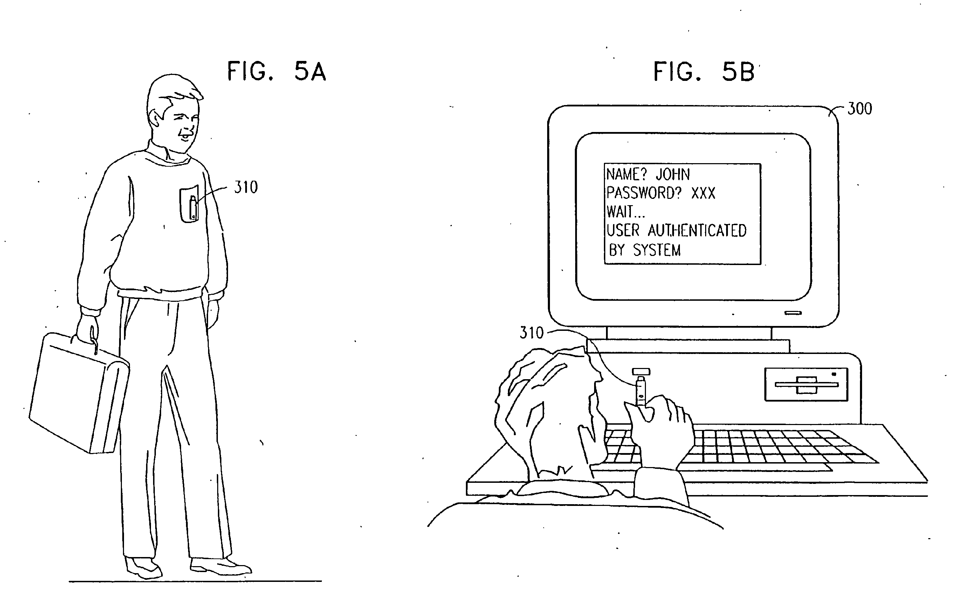

Figs. 5A - 5B pictorially illustrate a user-computer interaction method provided in accordance with a preferred embodiment of the present invention for use by a population of flexibly connectible computer systems 300 and a population of mobile users. Information characterizing each mobile user, e.g. name and ID, is loaded into the memory of an FCCS plug 310 to be borne by that mobile user, typically via a USB interface controller such as unit 230 of Fig. 3.

The plug can then be connected to one of the flexibly connectible computer systems and the information characterizing the mobile user employed to perform at least one computer operation typically comprising a conventional smart card functionality such as authentication.

Features of a preferred embodiment of the present invention are now described:
a. The need for enhanced user authentication
   * Authentication is the basis for any information security system. The ability to authenticate local and remote users is a critical issue for any LAN/Intranet, multi-user environment
b. The need for encryption and confidentiality
   * Content encryption & confidentiality becomes an important issue for both the corporation and the individual users
c. The need for password and Sign-On security
   * Password security and user password management are key issues for network corporate users. Passwords represent the single most important security concern in any computing environment

There is a need today for hardware-based PC security tokens
* Sign-On-Key (SOK) is a hardware-based token that seamlessly integrates with Operating Systems & Applications to provide:
   - a user authentication key
   - a basis for encryption system
   - better Sign-On security and enhanced user password management
   - Software Security
Authentication - 3 Basic Elements
* Something you know --> Password
* Something you have --> Sign-On-Key
* Something you are --> e.g., Bio-metrics

* Assumption: Two out of the above three provide "good-enough" security. Encryption
* The need to encrypt data, files, disks and information flow is evident.
* An hardware-based token with cryptographic abilities can enhance security and ease-of use.
Sign-On - Where are Passwords used?
* Log on to your O/S
* Log on to your Network (Local, Remote)
* Log on to the Internet/ISP
* Log on to protected Web pages
* Log on to GroupWare/Communications applications
* Log on to other sensitive password-protected applications
* MS Office & other protected files
* PC Boot protection (Bios Password)

### Sign-On - Major Security Risks

### The Sign-On Process

The Sign-On-Key is a security hardware token, linked by the user to the required applications. Once installed the -Sign-On-Key becomes a part of the log-on process. Sign-On-Key provides the user with many security and other functional benefits.

What Can Sign-On-Key Do For a User?
* Sign-On Security
   - Enhance security & authentication. The Sign-On-Key is required in addition to the user password
* Sign-On Simplicity
   - Simplify log-on process and eliminate the need for a password. The Sign-On-Key replaces the password
* Password Automatic Re-verification
   - Check for Sign-On-Key periodically
* Single-Sign-On
   - One Sign-On-Key replaces several passwords for several applications
* Mobility & Remote Computing
   - Sign-On-Key identifies remote users
   - Sign-On-Key can be used as a data secure container
   - Theft deterrent of mobile PCs
* General Purpose Security Token
   - File & data Encryption
   - Authentication
   - Certificate Key Holder
Sign-On-Key Various Options
* Several hardware devices may operate as Sign-On-Keys:
   - Sign-On-Key USB - A small key that connects to the new standard USB port. USB ports are becoming the new connectivity standard for PCs and Macintosh
   - Sign-On-Key SC - A smart card based Sign-On-Key. Can be used with any standard smart card drive
Sign-On-Key USPs & Advantages
* Simple, intuitive, easy to use, attractive token
* The key IS the token IS the connector
* Low cost

* High security
* High functionality
   - Memory inside token
   - Processing power
   - Automatic Password Re-verification
   - Multi token connectivity
* The Agents' solution
Sign-On-Key Architecture
Full Blown System.
Sign On Agents
* The Sign-On-Agent is a software interface between the Sign-On-Key and the application.
* The Sign-On-Boot is a special interface for the PC boot password.
* Agents may be provided for:
   - OS/Net Ware - e.g., Windows NT, 95/98, 3x, Novell, Unix
   - Group Ware/Mail - e.g, Lotus Notes, Outlook, Eudora,
   - Enterprise Applications - e.g., SAP, Baan, MK, Oracle, Magic
   - Web Browsers - e.g., Explorer, Navigator
The Most Trivial Agent - Windows NT
* The most trivial Agent will replace the Windows Login session
* By doing so Users may gain
   - Windows Login Extra security
   - Windows Login simplification (Sign-On-Key replaces password)
Sign-On-Key Web Browsers' Agent/System
* Sign-On-Key can be used as an authentication token to monitor access to secured web pages
* Web content providers need to authenticate, manage and provide access to their customers
Sign-On-Key API (SDK)
* Sign-On-Key API is the interface level between the Sign-On-Key and 3rd parties' applications.
* This API may be published and opened for usage by certification providers, security companies and SSO companies:

* The Sign-On-Key API will also provide encryption & protected memory storage services
* Sign-On-Key API may be PKCS #11 based/compatible
The Sign-On Process (No CA)
* Installation
   - User installs Agents for required applications
   - User defines Sign-On Parameters for each application
   - User stores Sign-On information in Sign-On-Key
* Sign-On
   - Application is started
   - Application reaches its Sign-On dialog
   - Application communicates with the Sign-On-Key
   - Sign-On permission is granted based on Sign-On-Key
Sign-On-Key As a Secure Container
* In addition to unique Key ID, Sign-On-Key will contain personal protected memory area
* This memory area can be used for storing sensitive information and Certificates
* Applications' ID keys like Lotus Notes ID file or PGP keys can be stored in this memory
* Doing so - Sign-On-Key can be used to increase mobile computing security. Files IDs are stored in Sign-On-Key instead of disk
Sign-On-Key An Encryption Engine & Sign-On-Key Crypt
* Sign-On-Key can be used as an encrypting device
* An encryption API may be provided, e.g., a 100% smart card compatible Sign-On-Key implementation
* Sign-On-Key Crypt is a Data/File/Hard disk encryption utility based on Sign-On-Key. Sign-On-Key Certification Toolkit
* SOK may use PKCS #11 and X509 and store certificates and/or digital IDs.
Sign-On-Key comprises:
* Sign-On-Key USB Token
* HASP
* Hardlock
* Initial Sign-On-Key functionality (Unique ID, personal protected memory)
* Sign-On-Key USB extension cable
* Sign-On-Key Smart Card Token
* Sign-On-Key API (PKCS #11 compliant)
* Entrust compatibility/link
* Windows NT Agent
* Navigator and/or Explorer Agent (S/Mime)
* Key Plus Crypt (Beta release)
* Secure Screen Saver
* Initial marketing package

* USB proliferation & Windows 98/NT availability are key issues
* In the US, Germany & Israel all new PCs shipped are USB equipped.
* Section in Early Development stage.
* Security Dynamics, ActivCard & Vasco control the market with 1st generation time-based, one-time password or challenge-based tokens
* security vendors will look to expand their market share with second generation integrated smart card offerings which will support cryptography, digital signature storage and processing activity
USB: The Better Connection
* Almost unlimited port expansion
* No add-in cards for new peripherals
   - no setting of IRQs, DMAs, etc.
* One connection type (plug and port)
   - variety of peripherals
   - no more guesswork
   - simple setup, just plug in and go
USB: The Better Connection
* Addresses need for speed, multimedia
   - 12 Mb/s, Asynch (bulk) & Isoch (real time) data
   - stereo-quality digital audio
   - high frame-rate video (with compression)
   - high latency applications (force-feedback)
* No power bricks with many new peripherals
   - USB supplies up to 500mA
* PC User experience is vastly improved
   - Fewer returns and increased sales potential

It is appreciated that USB is only one example of a flexible connectivity standard and the present invention is not intended to be limited to USB.

It is appreciated that the software components of the present invention may, if desired, be implemented in ROM (read-only memory) form. The software components may, generally, be implemented in hardware, if desired, using conventional techniques.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the scope of the present invention is defined only by the appended claims.

Where technical features mentioned in any claim are followed by reference signs, those reference signs have been included just for the sole purpose of increasing intelligibility of the claims and accordingly, such reference signs do not have any limiting effect on the scope of each element identified by way of example by such reference signs.

## Claims

1. A portable smart card apparatus (110) for providing smart card functions to a host system (120), by communicating with a USB interface (140) of the host system (120), said smart card apparatus (110) comprising:
a smart card chip (170), for performing said smart card functions; a USB interface (140), for connecting the portable device apparatus (110) with said host system (120), via USB protocol; and
a microprocessor (130), for enabling at least one function selected from the group consisting of controlling the transfer of data between said USB interface (140) and said smart card chip (170), converting data from a USB format to the format of said smart card chip (170) and converting data from the format of said smart card chip (170) to a USB format;
**characterised in that**:
said portable smart card apparatus (110) communicates with said USB interface (140) of the host system (120) without a smart card reader.

2. An apparatus according to claim 1, wherein said portable device consists of at least one PCB (125) having thereon said smart card chip (170), said USB interface (140), and said microprocessor (130).

3. An apparatus according to claim 1, wherein said portable device is a USB key operative as a housing (200, 210) into which said smart card chip (170), said USB interface (140), and said microprocessor (130) are placed.

4. An apparatus according to claim 1, wherein said portable device further comprises data storage means, for storing data required for the operation of at least one element selected from the group consisting of said microprocessor (130) and said smart card chip (170).

5. An apparatus according to claim 1, wherein said portable device further comprises secured memory.

6. An apparatus according to claim 1, wherein said apparatus is operative to perform at least one function selected from the group consisting of cryptography, authentication, encryption, public key infrastructure, digital signature and access control.

7. An apparatus according to claim 1, wherein said apparatus supports ISO7816 protocol.

8. An apparatus according to claim 1, wherein said smart card chip (170) is operationally connected to said microprocessor (130).

9. A method for interacting between a smart card chip (170) and a host (120) by communicating with a USB interface (140) of the host (120), comprising the steps of:
coupling said host (120) with a USB interface (140), for interacting with an external device via a USB protocol;
providing a portable smart card apparatus, comprising said smart card chip (170), said portable device having thereon a USB interface (140), for interacting with said host (120) via USB protocol, and a microprocessor (130), for executing at least one function selected from the group consisting of controlling the transfer of data between said USB interface (140) and said smart card chip (170), converting data from a USB format to the format of said a smart card chip (170) and converting data from the format of said a smart card chip (170) to a USB format;
upon receiving data in the USB interface (140) of said portable device, converting said data from a USB format to a smart card format by said microprocessor (130), and conveying the converted data to said smart card chip (170); and
upon sending data from said smart card chip (170) to said host (120), converting said data from the format of said smart card chip (170) to a USB format by said microprocessor (130), conveying the converted data to the USB interface (140) of said portable device, and therefrom to said host (120), via said host's (120) USB interface (140)
**characterised in that**:
said smart card chip (170) communicates with said USB interface (140) of the host (120) without a smart card reader.

10. A method according to claim 9, wherein said portable device consists of at least one substrate having thereon said smart card chip (170), said USB interface (140), and said microprocessor (130).

11. A method according to claim 9, wherein said portable device is a USB key operative as a container into which said smart card chip (170), said USB interface (140), and said microprocessor (130) are placed.

12. A method according to claim 9, wherein said portable device further comprises data storage means, for storing data required for operating at least one component selected from the group consisting of microprocessors (130)s and smart card chips (170).

13. A method according to claim 9, wherein said portable device further comprises secured memory.

14. A method according to claim 9, wherein said method is operative to perform at least one function selected from the group consisting of cryptography, authentication, encryption, public key infrastructure, digital signature and access control.

15. A method according to claim 9, wherein said portable device supports IS07816 protocol.

16. A method according to claim 9, wherein said smart card chip (170) is operationally connected to said microprocessor (130).

## Patentansprüche

1. Ein tragbarer Smartcard-Apparat (110) zur Bereitstellung von Smartcard-Funktionen für ein Host-System (120) durch Kommunikation mit einer USB-Schnittstelle (140) des Host-Systems (120), wobei der Smartcard-Apparat (110) folgendes umfasst:
einen Smartcard-Chip (170) zur Durchführung der Smartcard-Funktionen; eine USB-Schnittstelle (140) zur Verbindung des tragbaren Vorrichtungs-Apparats (110) mit dem Host-System (120) über ein USB-Protokoll; und
einen Mikroprozessor (130) zur Ermöglichung mindestens einer Funktion, ausgewählt aus der Gruppe bestehend aus Steuern des Datentransfers zwischen der USB-Schnittstelle (140) und dem Smartcard-Chip (170), Umwandeln von Daten aus einem USB-Format in das Format des Smartcard-Chips (170) und Umwandeln von Daten aus dem Format des Smartcard-Chips (170) in ein USB-Format; **dadurch gekennzeichnet, dass** der tragbare Smartcard-Apparat (110) mit der USB-Schnittstelle (140) des Host-Systems (120) ohne einen Smartcard-Leser kommuniziert.

2. Ein Apparat gemäß Anspruch 1, wobei die tragbare Vorrichtung aus mindestens einem PCB (125) besteht, das darauf den Smartcard-Chip (170), die USB-Schnittstelle (140) und den Mikroprozessor (130) aufweist.

3. Ein Apparat gemäß Anspruch 1, wobei die tragbare Vorrichtung ein USB-Schlüssel ist, der als ein Gehäuse (200, 210) operativ ist, in dem der Smartcard-Chip (170), die USB-Schnittstelle (140) und der Mikroprozessor (130) platziert sind.

4. Ein Apparat gemäß Anspruch 1, wobei die tragbare Vorrichtung ferner Datenspeichermittel zur Speicherung von Daten umfasst, die für den Betrieb von mindestens einem Element, ausgewählt aus der Gruppe bestehend aus dem Mikroprozessor (130) und dem Smartcard-Chip (170), erforderlich sind.

5. Ein Apparat gemäß Anspruch 1, wobei die tragbare Vorrichtung ferner einen gesicherten Speicher umfasst.

6. Ein Apparat gemäß Anspruch 1, wobei der Apparat operativ ist, um mindestens eine Funktion, ausgewählt aus der Gruppe bestehend aus Kryptographie, Authentifizierung, Verschlüsselung, Infrastruktur öffentlicher Schlüssel, digitale Signatur und Zugriffskontrolle, durchzuführen.

7. Ein Apparat gemäß Anspruch 1, wobei der Apparat das Protokoll IS07816 unterstützt.

8. Ein Apparat gemäß Anspruch 1, wobei der Smartcard-Chip (170) mit dem Mikroprozessor (130) operativ verbunden ist.

9. Ein Verfahren zur Interaktion zwischen einem Smartcard-Chip (170) und einem Host (120) durch Kommunikation mit einer USB-Schnittstelle (140) des Hosts (120), das die folgenden Schritte umfasst:
Koppeln des Hosts (120) mit einer USB-Schnittstelle (140) zur Interaktion mit einer externen Vorrichtung mittels über ein USB-Protokoll;
Bereitstellen eines tragbaren Smartcard-Apparates, der den Smartcard-Chip (170) umfasst, wobei die tragbare Vorrichtung darauf eine USB-Schnittstelle (140) zur Interaktion mit dem Host (120) über ein USB-Protokoll und einen Mikroprozessor (130) zur Durchführung mindestens einer Funktion, ausgewählt aus der Gruppe bestehend aus Steuern des Datentransfers zwischen der USB-Schnittstelle (140) und dem Smartcard-Chip (170), Umwandeln von Daten aus einem USB-Format in das Format des Smartcard-Chips (170) und Umwandeln von Daten aus dem Format des Smartcard-Chips (170) in ein USB-Format, aufweist;
nach Empfang von Daten in der USB-Schnittstelle (140) der tragbaren Vorrichtung, Umwandeln der Daten aus einem USB-Format in ein Smartcard-Format durch den Mikroprozessor (130) und Befördern der umgewandelten Daten zu dem Smartcard-Chip (170); und
nach Senden von Daten von dem Smartcard-Chip (170) zu dem Host (120), Umwandeln der Daten aus dem Format des Smartcard-Chips (170) in ein USB-Format durch den Mikroprozessor (130), Befördern der umgewandelten Daten zu der USB-Schnittstelle (140) der tragbaren Vorrichtung und davon zu dem Host (120) mittels der USB-Schnittstelle (140) des Hosts (120); **dadurch gekennzeichnet, dass** der Smartcard-Chip (170) mit der USB-Schnittstelle (140) des Hosts (120) ohne einen Smartcard-Leser kommuniziert.

10. Ein Verfahren gemäß Anspruch 9, wobei die tragbare Vorrichtung aus mindestens einem Substrat besteht, das darauf den Smartcard-Chip (170), die USB-Schnittstelle (140) und den Mikroprozessor (130) aufweist.

11. Ein Verfahren gemäß Anspruch 9, wobei die tragbare Vorrichtung ein USB-Schlüssel ist, der als ein Behälter operativ ist, in dem der Smartcard-Chip (170), die USB-Schnittstelle (140) und der Mikroprozessor (130) platziert sind.

12. Ein Verfahren gemäß Anspruch 9, wobei die tragbare Vorrichtung ferner Datenspeichermittel zur Speicherung von Daten umfasst, die für den Betrieb von mindestens einer Komponente, ausgewählt aus der Gruppe bestehend aus Mikroprozessoren (130) und Smartcard-Chips (170), erforderlich sind.

13. Ein Verfahren gemäß Anspruch 9, wobei die tragbare Vorrichtung ferner einen gesicherten Speicher umfasst.

14. Ein Verfahren gemäß Anspruch 9, wobei das Verfahren operativ ist, um mindestens eine Funktion, ausgewählt aus der Gruppe bestehend aus Kryptographie, Authentifizierung, Verschlüsselung, Infrastruktur öffentlicher Schlüssel, digitale Signatur und Zugriffskontrolle, durchzuführen.

15. Ein Verfahren gemäß Anspruch 9, wobei die tragbare Vorrichtung das Protokoll IS07816 unterstützt.

16. Ein Verfahren gemäß Anspruch 9, wobei der Smartcard-Chip (170) mit dem Mikroprozessor (130) operativ verbunden ist.

## Revendications

1. Dispositif de carte à puce portable (110) pour fournir des fonctions de carte à puce à un système hôte (120), en communiquant avec une interface USB (140) du système hôte (120), ledit dispositif de carte à puce (110) comprenant ;
une puce de carte à puce (170), pour effectuer lesdites fonctions de carte à puce ; une interface USB (140), pour connecter le dispositif portable (110) audit système hôte (120), par l'intermédiaire d'un protocole USB ; et
un microprocesseur (130), pour autoriser au moins une fonction sélectionnée dans le groupe composé du contrôle du transfert de données entre ladite interface USB (140) et ladite puce de carte à puce (170), de la conversion de données d'un format USB en le format de ladite puce de carte à puce (170) et de la conversion de données du format de ladite puce de carte à puce (170) en un format USB;
**caractérisé en ce que** :
ledit dispositif de carte à puce portable (110) communique avec ladite interface USB (140) du système hôte (120) sans lecteur de carte à puce.

2. Dispositif selon la revendication 1, dans lequel ledit dispositif portable consiste en au moins une PCB (125) ayant sur celle-ci ladite puce de carte à puce (170), ladite interface USB (140), et ledit microprocesseur (130),

3. Dispositif selon la revendication 1, dans lequel ledit dispositif portable est une clé USB pouvant être mise en oeuvre en tant que logement (200, 210) dans lequel sont placés ladite puce de carte à puce (170), ladite interface USB (140), et ledit microprocesseur (130).

4. Dispositif selon la revendication 1, dans lequel ledit dispositif portable comprend en outre des moyens de mémorisation de données, pour mémoriser des données nécessaires pour le fonctionnement d'au moins un élément sélectionné dans le groupe composé du microprocesseur (130) et de ladite puce de carte à puce (170).

5. Dispositif selon la revendication 1, dans lequel ledit dispositif portable comprend en outre une mémoire sécurisée.

6. Dispositif selon la revendication 1, dans lequel ledit dispositif peut être mis en oeuvre pour effectuer au moins une fonction sélectionnée dans le groupe composé d'une cryptographie, d'une authentification, d'un chiffrement, d'une infrastructure de clé publique, d'une signature numérique et de contrôle d'accès.

7. Dispositif selon la revendication 1, dans lequel ledit dispositif prend en charge le protocole ISO7816.

8. Dispositif selon la revendication 1, dans lequel ladite puce de carte à puce (170) est connectée en fonctionnement audit microprocesseur (130).

9. Procédé pour interagir entre une puce de carte à puce (170) et un hôte (120) en communiquant avec une interface USB (140) de l'hôte (120), comprenant les étapes consistant à :
coupler ledit hôte (120) avec une interface USB (140), pour interagir avec un dispositif externe par l'intermédiaire d'un protocole USB ;
fournir un dispositif de carte à puce portable, comprenant ladite puce de carte à puce (170), ledit dispositif portable ayant sur celui-ci une interface USB (140), pour interagir avec ledit hôte (120) par l'intermédiaire d'un protocole USB, et un microprocesseur (130), pour exécuter au moins une fonction sélectionnée dans le groupe composé de la commande du transfert de données entre ladite interface USB (140) et ladite puce de carte à puce (170), de la conversion des données d'un format USB en le format de ladite puce de carte à puce (170) et de la conversion des données du format de ladite puce de carte à puce (170) en un format USB;
lors de la réception de données dans l'interface USB (140) dudit dispositif portable, convertir lesdites données d'un format USB en un format de carte à puce par ledit microprocesseur (130), et acheminer les données converties vers ladite puce de carte à puce (170); et
lors de l'envoi de données de ladite puce de carte à puce (170) audit hôte (120), convertir lesdites données du format de ladite puce de carte à puce (170) en un format USB par ledit microprocesseur (130), acheminer les données converties vers l'interface USB (140) dudit dispositif portable et, de là, vers ledit hôte (120), par l'intermédiaire de l'interface USB (140) dudit hôte (120) ;
**caractérisé en ce que** :
ladite puce de carte à puce (170) communique avec ladite interface USB (140) de l'hôte (120) sans lecteur de carte à puce.

10. Procédé selon la revendication 9, dans lequel ledit dispositif portable consiste en au moins un substrat ayant sur celui-ci ladite puce de carte à puce (170), ladite interface USB (140), et ledit microprocesseur (130).

11. Procédé selon la revendication 9, dans lequel ledit dispositif portable est une clé USB pouvant être mise en oeuvre en tant que logement dans lequel sont placés ladite puce de carte à puce (170), ladite interface USB (140), et ledit microprocesseur (130).

12. Procédé selon la revendication 9, dans lequel ledit dispositif portable comprend en outre des moyens de mémorisation de données, pour mémoriser des données nécessaires pour faire fonctionner au moins un composant sélectionné dans le groupe composé des microprocesseurs (130) et des puces de carte à puce (170).

13. Procédé selon la revendication 9, dans lequel ledit dispositif portable comprend en outre une mémoire sécurisée.

14. Procédé selon la revendication 9, dans lequel ledit procédé peut être mis en oeuvre pour effectuer au moins une fonction sélectionnée dans le groupe composé d'une cryptographie, d'une authentification, d'un chiffrement, d'une infrastructure de clé publique, d'une signature numérique et d'un contrôle d'accès.

15. Procédé selon la revendication 9, dans lequel ledit dispositif portable prend en charge le protocole ISO7816.

16. Procédé selon la revendication 9, dans lequel ladite puce de carte à puce (170) est connectée en fonctionnement audit microprocesseur (130).
